# EUROPÄISCHE PATENTSCHRIFT

(11) **EP 2 300 729 B1**
(45) Veröffentlichungstag und Bekanntmachung des Hinweises auf die Patenterteilung: **12.09.2012**
(21) Anmeldenummer: 09749141.9
(22) Anmeldetag: 13.11.2009
(51) Int. Cl.: F16D 55/2265

(54) **BREMSSYSTEM FÜR SCHEIBENBREMSEN**
BRAKE SYSTEM FOR DISK BRAKES
SYSTEME DE FREINAGE POUR FREINS A DISQUE

(30) Priorität: 25.11.2008 DE 102008044060
(43) Veröffentlichungstag der Anmeldung: 30.03.2011
(73) Patentinhaber: SAF-HOLLAND GmbH, 63856 Bessenbach (DE)
(72) Erfinder: DREWES, Olaf, 63743 Aschaffenburg (DE)
(74) Vertreter: Müller Schupfner & Partner
(86) Internationale Anmeldenummer: PCT/EP2009/065142
(87) Internationale Veröffentlichungsnummer: WO 2010/060814

(56) Entgegenhaltungen:
- WO-A-2008/055695
- DE-A1- 2 151 687
- DE-A1- 10 245 027
- DE-A1- 10 341 095
- GB-A- 2 156 924
- JP-A- 8 004 806
- US-A- 4 372 428
- US-A- 5 439 084

## Beschreibung

Die vorliegende Erfindung bezieht sich auf ein Bremssystem für Scheibenbremsen, insbesondere von Landfahrzeugen, welche aus einem Bremssattel, der die Bremsscheibe überspannt, und einem den Bremssattel tragenden Bremsträger ausgebildet sind.

Bremssysteme der in Rede stehenden Art sind hinlänglich aus dem Stand der Technik bekannt. So wurden Bremssysteme entwickelt, bei welchen vor dem Hintergrund der Gewichts- und Kostenoptimierung der Ringträger der Bremse, welcher ebenfalls den reaktionsseitigen Bremsbelag aufnimmt, durch einen ebenen Träger ersetzt wurde, bei welchem der reaktionsseitige Bremsbelag direkt im Bremssattel gelagert wird. Problematisch bei derartigen Bremssystemen ist jedoch, dass aufgrund der direkten Lagerung des Bremsbelags im Bremssattel der Bremse Schwingungen, welche zum Beispiel durch ein Verhaken des Bremsbelags mit der Bremsscheibe und anschließendes Losreißen entstehen (sog. Slip-Stick-Effekt), direkt in dem Bremssattel eingeleitet werden. Infolgedessen können empfindliche Bauteile, wie Bremszylinder, Anbindung des Bremssattels am Bremsträger oder Anbindung des Fahrwerksystems am Fahrzeug(rahmen) aufgrund dieser Vibrationen derart geschädigt werden, dass sie ausfallen. Ferner besteht das Problem, dass die Geräuschentwicklung des Bremssystems während des Bremsens aufgrund der Schwingungen derart groß ist, dass ein Einsatz der Bremsen nicht möglich ist. Schließlich beeinträchtigt ein solches Bremssystem die Betriebssicherheit des Fahrzeugs während des Bremsens.

Die DE 2 151687 betrifft eine gattungsbildende Scheibenbremse mit den Merkmalen des Oberbegriffs des Anspruchs 1, bei der der Bremssattel axial beweglich zur Bremsscheibe angeordnet ist und auf einem feststehenden Träger verschiebbar angeordnet ist.

Die JP 8 004 806 A betrifft eine Bremsträgeranordnung, bei welcher ein Bremssattel an einem Bremsträger verschieblich gelagert ist, indem ein Bolzen des Bremsträgers in den Bremssattel eingreift.

Die DE 10 341 095 betrifft eine Scheibenbremse für ein Nutzfahrzeug mit einem Bremssattel, der mittels zweier Befestigungselemente, von denen eines als Fest- und das andere als Loslager ausgebildet ist, bezogen auf die Bremsscheibe axial verschiebbar an einem ortsfesten Bremsträger befestigt ist.

Es ist somit Aufgabe der vorliegenden Erfindung, ein Bremssystem für Scheibenbremsen, insbesondere von Landfahrzeugen, vorzusehen, bei welchem Geräusche aufgrund von Schwingungen vermieden werden können, während die Bremswirkung optimiert wird.

Diese Aufgabe wird durch ein Bremssystem für Scheibenbremsen, insbesondere von Landfahrzeugen, mit den Merkmalen des Anspruchs 1 gelöst. Bevorzugte Ausführungsformen ergeben sich aus den abhängigen Ansprüchen.

Erfindungsgemäß ist ein Bremssystem für Scheibenbremsen, insbesondere von Landfahrzeugen, vorgesehen, umfassend einen Bremssattel, welcher zwei gegenüberliegende Bremsbeläge aufweist, um mit einer zwischen diesen angeordneten Bremsscheibe in Eingriff zu gelangen, und einen Bremsträger, an welchem der Bremssattel über eine Befestigungsvorrichtung axial verlagerbar angeordnet ist, wobei die Befestigungsvorrichtung eine erste Lagereinrichtung aufweist, über welche der Bremssattel an dem Bremsträger schwingungsgedämpft gelagert ist. Zweckmäßigerweise ist das Bremssystem für Scheibenbremsen vorgesehen, wobei die Bremsscheibe der Scheibenbremsen massiv oder als innenbelüftete Bremsscheibe ausgebildet sein kann. Anwendung findet das Bremssystem insbesondere bei Landfahrzeugen, wie Kraftfahrzeugen, Nutzfahrzeugen, Anhängern oder Zügen, kann jedoch bei beliebig anderen gebremsten Maschinen oder Fahrzeugen (Flugzeuge) vorgesehen sein. Zum Bremsen der Bremsscheibe weist der Bremssattel zweckmäßigerweise zwei gegenüberliegende Bremsbeläge auf. In anderen Worten sind die Bremsbeläge in Axialrichtung gegenüberliegend derart angeordnet, dass die Bremsscheibe zwischen diesen angeordnet ist. Axialrichtung ist hierbei eine Richtung im Wesentlichen senkrecht zur Rotationsebene der Bremsscheibe, sodass die Axialrichtung im Wesentlichen parallel zur Rotationsachse des Rads bzw. der Bremsscheibe angeordnet ist bzw. dieser entspricht. Vorteilhafterweise ist der Bremsträger vorgesehen, um den Bremssattel über eine Befestigungsvorrichtung derart aufzunehmen, dass der Bremssattel in Bezug auf den Bremsträger axial verlagerbar ist. In anderen Worten kann der Bremssattel in Bezug auf den Bremsträger in Axialrichtung verlagert werden. Somit ist der Bremssattel zweckmäßigerweise in Form eines sog. Schwimmsattels ausgebildet, welcher derart axial verlagerbar am Bremsträger angeordnet ist, dass dieser bei Betätigung des Bremszylinders den (nicht beweglichen) gegenüberliegenden Bremsbelag per Sattelumgriff (Zange) an die Bremsscheibe herandrückt. Infolgedessen sind Bremszylinder und Bremskolben lediglich an einer Seite der Bremsscheibe am Bremssattel vorgesehen. Um die Bremswirkung auf die Bremsscheibe zu übertragen, ist der Bremsträger nicht rotierbar am Fahrzeug angeordnet. Dies erfolgt vorteilhafterweise über eine mittelbare (über zwischengeschaltete Elemente) oder unmittelbare Befestigung des Bremsträgers an einem Fahrwerks- oder Rahmenelement des Fahrzeugs. Der Bremssattel ist vorteilhafterweise über eine Befestigungsvorrichtung am Bremsträger angeordnet bzw. befestigt bzw. gelagert. Hierfür weist die Befestigungsvorrichtung zweckmäßigerweise eine erste Lagereinrichtung auf, mittels welcher der Bremssattel an dem Bremsträger zumindest teilweise schwingungsgedämpft gelagert ist. In anderen Worten ermöglicht die erste Lagereinrichtung, dass Schwingungen des Bremssattels in diesem Bereich nicht oder nur geringfügig in den Bremsträger übergeleitet werden. Somit kann die erste Lagereinrichtung im Wesentlichen als Loslager ausgebildet sein, welches soviel Spiel zwischen den Lagerelementen der ersten Lagereinrichtung bereitstellt, dass die im Bremssattel auftretenden Schwingungen nicht oder nur geringfügig an den Bremsträger weitergegeben werden. Zur Verbesserung der Betriebssicherheit des erfindungsgemäßen Bremssystems kann somit die Dämpfung, welche ursprünglich in einem temperaturkritischen Bereich nahe des Bremsbelags vorgesehen war, in einen temperaturunkritischen Bereich, nämlich die Lagerung des Bremssattels an dem Bremsträger, verlagert werden.

Erfindungsgemäβ ist der Bremssattel über ein Dämpfungselement der ersten Lagereinrichtung an dem Bremsträger gelagert. Die erste Lagereinrichtung weist somit ein Dämpfungselement auf, welches es ermöglicht, dass Schwingungsenergie, welche vom Bremssattel in die erste Lagereinrichtung eingeleitet wird, aufgenommen und nicht an den Bremsträger weitergegeben wird. Es versteht sich, dass das Dämpfungselement ebenfalls als Dämpfungseinheit ausgebildet sein kann, welche eine Vielzahl von darin angeordneten Dämpfungselementen aufweist.

Vorteilhafterweise weist die erste Lagereinrichtung einen ersten Lagerbolzen und einer erste Aufnahme auf, von welchen der/die eine am Bremsträger und der der/die andere am Bremssattel vorgesehen ist, wobei der erste Lagerbolzen zumindest teilweise in der ersten Aufnahme aufgenommen ist. Die Aufnahme kann in dem Bremsträger vorgesehen sein. Vorzugsweise ist diese jedoch im Bremssattel ausgebildet. Gleichermaßen kann der erste Lagerbolzen im Bremssattel vorgesehen sein, ist jedoch besonders vorzugsweise am Bremsträger ausgebildet. Es hat sich gezeigt, dass beide Varianten gleichwertig und gleichwirkend sind. Der erste Lagerbolzen ist zweckmäßigerweise im Wesentlichen zylinderförmig ausgebildet und erstreckt sich vorteilhafterweise im Wesentlichen in Axialrichtung. Die Form und der (im Wesentlichen senkrecht zur Axialrichtung gelegene) Querschnitt des ersten Lagerbolzens kann beliebig sein. Besonders vorteilhafterweise ist der erste Lagerbolzen im Querschnitt jedoch rund, besonders vorzugsweise kreisrund. Der erste Lagerbolzen kann hohl oder massiv ausgebildet sein und entweder einstückig aus einem einzigen Element oder mehrteilig gebildet sein. Besonders zweckmäßigerweise ist der erste Lagerbolzen mehrteilig ausgebildet, nämlich aus einer Hülse oder Buchse, durch welche sich eine Schraube erstreckt, die die Hülse bzw. Buchse am Bremsträger festlegt bzw. befestigt. Die Hülse oder Buchse dient dann hierbei als Lagerelement-Fläche des ersten Lagerbolzens. Die erste Aufnahme ist derart ausgebildet, dass sich der erste Lagerbolzen in diese axial hinein erstreckten kann. Hierfür ist die erste Aufnahme somit im Wesentlichen als Rücksprung oder Hohlraum ausgebildet, welcher den ersten Lagerbolzen zumindest teilweise umgibt. Um die axiale Verlagerbarkeit des Bremssattels zu ermöglichen, kann sich der erste Lagerbolzen in der ersten Aufnahme in Axialrichtung bewegen.

Zweckmäßigerweise sind der erste Lagerbolzen und die erste Aufnahme über ein Dämpfungselement miteinander verbunden. In anderen Worten stellt das Dämpfungselement das Verbindungsglied zwischen dem ersten Lagerbolzen und der ersten Aufnahme dar. Hierfür ist das Dämpfungselement vorteilhafterweise zwischen dem ersten Lagerbolzen und der ersten Aufnahme angeordnet. In anderen Worten kann das Dämpfungselement somit in der ersten Aufnahme aufgenommen bzw. angeordnet bzw. vorgesehen sein. Mit Bezug auf den ersten Lagerbolzen ist das Dämpfungselement um diesen herum bzw. umfänglich angeordnet bzw. umgibt bzw. umschließt einen ringförmigen Bereich der Mantelfläche des ersten Lagerbolzens bzw. ist an diesem angeordnet.

Vorteilhafterweise ist das Dämpfungselement als ringförmiger Körper ausgebildet. Das Dämpfungselement kann somit besonders zweckmäßigerweise hohlzylinderförmig ausgebildet sein. Hierbei kann sich der erste Lagerbolzen durch das Dämpfungselement hindurch erstrecken und die erste Aufnahme an der Außenseite bzw. Mantelfläche des Dämpfungselements angeordnet sein.

Vorzugsweise weist das Dämpfungselement eine nicht-konstante oder nicht-lineare Feder- bzw. Dämpferkennlinie auf. Die Federkennlinie bzw. Federkonstante bzw. Federhärte ist definiert durch den Zusammenhang zwischen Verformung des Dämpfungselements und der auf dieses einwirkende Kraft. Die Feder- oder Dämpferkennlinie kann nicht-konstant oder nicht-linear ausgebildet sein. Hierdurch wird besonders vorteilhafterweise der sogenannte "slip-stick-Effekt" verringert, welcher auftritt, wenn der auf die Bremse einwirkende Bremsdruck bzw. die einwirkende Kraft niedrig ist, so dass der Bremssattel in Schwingungen mit der Eigenfrequenz oder einem Vielfachen hiervon gerät. Dementsprechend ist die Feder- bzw. Dämpferkennlinie in einem ersten Bereich relativ flach ausgebildet. Bei einem hohen Bremsdruck bzw. einer hohen einwirkenden Kraft treten keine Schwingungen auf, so dass die Notwendigkeit einer Dämpfung geringer ist. Vielmehr sollte der Bremssattel bei einem hohen Bremsdruck optimal geführt werden. Daher ist in diesem Bereich die Feder- bzw. Dämpferkennlinie steil bzw. steiler ausgebildet.

In einer Ausführungsform nicht gemäβ der Erfindung ist das Dämpfungselement als Elastomerlager ausgebildet, dessen Elastomerkern vorzugsweise eine Shore A-Härte zwischen etwa 35 und etwa 90 aufweist. Der Elastomerkern bzw. das Elastomerelement des Dämpfungselements kann aus einem beliebigen Material ausgebildet sein, ist jedoch vorzugsweise aus einem Gummi ausgebildet. Vorzugsweise weist der Elastomerkern eine Shore A-Härte zwischen etwa 35 und etwa 90 auf, besonders vorzugsweise zwischen etwa 45 und etwa 80 und ganz besonders vorzugsweise zwischen etwa 55 und etwa 75.

Vorteilhafterweise ist das als Elastomerlager ausgebildete Dämpfungselement mehrschichtig aufgebaut und weist vorzugsweise einen äußeren weichen Bereich und einen inneren harten Bereich auf. In radialer Richtung gesehen bzw. in einem senkrecht zur Längsachse des Dämpfungselements gesehenen Querschnitt weist das Dämpfungselement zumindest zwei radial zueinander bzw. konzentrisch zueinander angeordnete Schichten auf. So kann der äußere Bereich bzw. der äußere Mantelbereich aus einem weicheren Material ausgebildet sein als der innere Bereich bzw. der innere Mantelbereich. Zweckmäigerweise weist das mehrschichtig ausgebildete Dämpfungselement im äußeren Bereich eine Shore A-Härte zwischen 35 und 50, besonders vorzugsweise zwischen etwa 40 und 45 und der innere Bereich eine Shore A-Härte zwischen etwa 50 bis 90, vorzugsweise zwischen etwa 60 - 75 auf. Alternativ oder zusätzlich kann das Elastomerlager an seinem äußeren Bereich Materialaussparungen aufweisen, um einen weicheren Bereich zu definieren.

Erfindungsgemäβ ist das Dämpfungselement als Hydrolager ausgebildet, welches vorzugsweise als ringförmiger hohler Körper ausgebildet ist, in dessen Innerem ein Fluid vorgesehen ist. Hierbei dient insbesondere ein Fluid, wie Öl, der Dämpfung.

Ferner kann der Hohlraum des Hydrolagers in einzelne Kammern unterteilt sein, welche miteinander verbunden sind. Das enthaltene Fluid kann diese Verbindung durchströmen, so dass sich Relativbewegungen zwischen den beiden Anbindungsteilen des Lagers direkt auf das eingeschlossene Fluid übertragen und die relative Vergrößerung oder Verkleinerung der Hauptkammern zum Strömen des Fluids führen.

Zweckmäßigerweise weist das Hydrolager ein Fluid auf, dessen Viskosität vorzugsweise über eine Regel- bzw. Steuereinrichtung veränderlich bzw. einstellbar ist. Die Viskosität bzw. Fließfähigkeit des Fluids ist somit situationsabhängig steuerbar. Besonders vorteilhafterweise kann somit eine rheologische Flüssigkeit vorgesehen werden, deren Viskosität bzw. Zähigkeit einstellbar bzw. steuerbar bzw. bestimmbar ist. Zur Veränderung bzw. Einstellung der Viskosität des Fluids kann eine Regel- bzw. Steuereinrichtung vorgesehen sein. Diese kann ausgelegt sein, ein elektrisches und/oder magnetisches Feld und/oder einen elektrischen Strom bzw. Spannung in das Fluid einzuleiten, so dass dieses seine Viskositätseigenschaften ändert. Im Gegensatz zu einem mehrschichtig aufgebauten Elastomerlager ist es somit mittels dem Hydrolager möglich, nicht nur eine lineare Feder- bzw. Dämpferkennlinie vorzusehen, sondern ein nicht-konstantes oder nicht-lineares oder frei einstellbares Feder- bzw. Dämpferkennfeld.

Es versteht sich, dass als Dämpfungselement auch eine Kombination von verschiedenen Dämpfungssystemen vorgesehen sein kann, beispielsweise die Kombination aus einem Elastomer- und einem Hydrolager. Ebenfalls möglich ist die Verwendung eines Luftlagers oder die Kombination desselben mit einem Elastomerlager.

Erfindungsgemäβ weist die Befestigungsvorrichtung eine zweite Lagereinrichtung auf, über welche der Bremssattel an dem Bremsträger axial verlagerbar gelagert ist. Hinsichtlich der axialen Verlagerbarkeit erfüllt die zweite Lagereinrichtung somit dieselben Eigenschaften, Anforderungen oder Vorraussetzungen wie die erste Lagereinrichtung.

Im Gegensatz zur ersten Lagereinrichtung, ist es zweckmäßig, dass die zweite Lagereinrichtung als schwingungsungedämpftes Festlager ausgebildet ist. Die zweite Lagereinrichtung zeichnet somit aus, dass zwischen den Lagerelementen des Bremssattels und des Bremsträgers kein oder nur sehr wenig Spiel vorhanden ist. Im Übrigen ist zwischen den Lagerelementen der zweiten Lagereinrichtung von Bremssattel und Bremsträger kein Dämpfungselement vorgesehen. Durch die Ausbildung der ersten Lagereinrichtung als schwingungsgedämpftes Loslager und der zweiten Lagereinrichtung als schwingungsungedämpftes Festlager wird somit vorteilhafterweise ein statisch bestimmtes System bereitgestellt, wodurch verhindert werden kann, dass während des Bremsens ein ungewolltes "Flattern" des Bremssattels erfolgt. Hierdurch wird die Bremswirkung bzw. Betriebssicherheit des Bremssystems nochmals verbessert.

Vorzugsweise weist die zweite Lagereinrichtung einen zweiten Lagerbolzen und eine zweite Aufnahme auf, von welchen der/die eine am Bremsträger und der/die andere am Bremssattel vorgesehen ist, und wobei der zweite Lagerbolzen zumindest teilweise in der zweiten Aufnahme aufgenommen ist. Die Aufnahme kann in dem Bremsträger vorgesehen sein. Vorzugsweise ist diese jedoch im Bremssattel ausgebildet. Gleichermaßen kann der zweite Lagerbolzen im Bremssattel vorgesehen sein, ist jedoch besonders vorzugsweise am Bremsträger ausgebildet. Es hat sich gezeigt, dass beide Varianten gleichwertig und gleichwirkend sind. Der zweite Lagerbolzen ist zweckmäßigerweise im Wesentlichen zylinderförmig ausgebildet und erstreckt sich vorteilhafterweise im Wesentlichen in Axialrichtung. Die Form und der (im Wesentlichen senkrecht zur Axialrichtung gelegene) Querschnitt des zweiten Lagerbolzens kann beliebig sein. Besonders vorteilhafterweise ist der zweite Lagerbolzen im Querschnitt jedoch rund, besonders vorzugsweise kreisrund. Der zweite Lagerbolzen kann hohl oder massiv ausgebildet sein und entweder einstückig aus einem einzigen Element oder mehrteilig gebildet sein. Besonders zweckmäßigerweise ist der zweite Lagerbolzen mehrteilig ausgebildet, nämlich aus einer Hülse oder Buchse, durch welche sich eine Schraube erstreckt, die die Hülse bzw. Buchse am Bremsträger festlegt bzw. befestigt. Die Hülse oder Buchse dient dann hierbei als Lagerelement-Fläche des zweiten Lagerbolzens. Die zweite Aufnahme ist derart ausgebildet, dass sich der zweite Lagerbolzen in diese axial hinein erstreckten kann. Hierfür ist die zweite Aufnahme somit im Wesentlichen als Rücksprung oder Hohlraum ausgebildet, welcher den zweiten Lagerbolzen zumindest teilweise umgibt. Um die axiale Verlagerbarkeit des Bremssattels zu ermöglichen, kann sich der zweite Lagerbolzen in der zweiten Aufnahme in Axialrichtung bewegen. Der zweite Lagerbolzen kann somit unmittelbar in der zweiten Aufnahme axial verlagerbar gelagert sein. Besonders vorteilhafterweise ist jedoch zwischen der zweiten Lagerbolzen und der zweiten Aufnahme eine Hülse vorgesehen, die als Gleitlager für eine axiale Verlagerbarkeit des zweiten Lagerbolzens in der zweiten Aufnahme dient. Besonders vorteilhafterweise weist die Hülse bzw. Buchse die gleiche Querschnittskonfiguration (Innen- und Außendurchmesser) wie das Dämpfungselement der ersten Lagereinrichtung auf.

Bevorzugt weisen die erste und zweite Aufnahme die gleiche Innenkonfiguration auf. In anderen Worten sind die erste und die zweite Aufnahme zumindest in dem Bereich, in welchem diese den ersten und zweiten Lagerbolzen aufnehmen, hinsichtlich der Abmessungen gleich ausgebildet. Weiterhin vorzugsweise sind die ersten und zweiten Lagerbolzen zumindest hinsichtlich ihrer Querschnittskonfiguration (Durchmesser, Querschnittsform, ...) gleich ausgebildet.

Weitere Vorteile und Merkmale der vorliegenden Erfindung ergeben sich aus der nachfolgenden Beschreibung von bevorzugten beispielhaften Ausführungsformen des erfindungsgemäßen Bremssystems mit Bezug auf die beigefügten Figuren, wobei einzelne Merkmale der einzelnen Ausführungsformen zu neuen Ausführungsformen kombiniert werden können. Es zeigen:
Fig. 1 eine teilweise geschnittene perspektivische Ansicht einer beispielhaften Ausführungsform des erfindungsgemäßen Bremssystems.
Fig. 2 eine weitere teilweise geschnittene perspektivische Ansicht einer beispielhaften Ausführungsform des erfindungsgemäßen Bremssystems.
Fig. 3 eine teilweise Querschnittsansicht einer nicht erfindungsgemäβen Ausführungsform der ersten Lagereinrichtung.
Fig. 4 eine teilweise Querschnittsansicht einer Ausführungsform der erfindungsgemäßen ersten Lagereinrichtung.
Fig. 5 eine teilweise Querschnittsansicht einer bevorzugten Ausführungsform der erfindungsgemäßen zweiten Lagereinrichtung.
Fig. 6 Kennlinien von Dämpfungselementen aus einem Elastomer-Material
Fig. 7 Kennfelder von als Hydrolager ausgebildeten Dämpfungselementen gemäß bevorzugter Ausführungsformen.

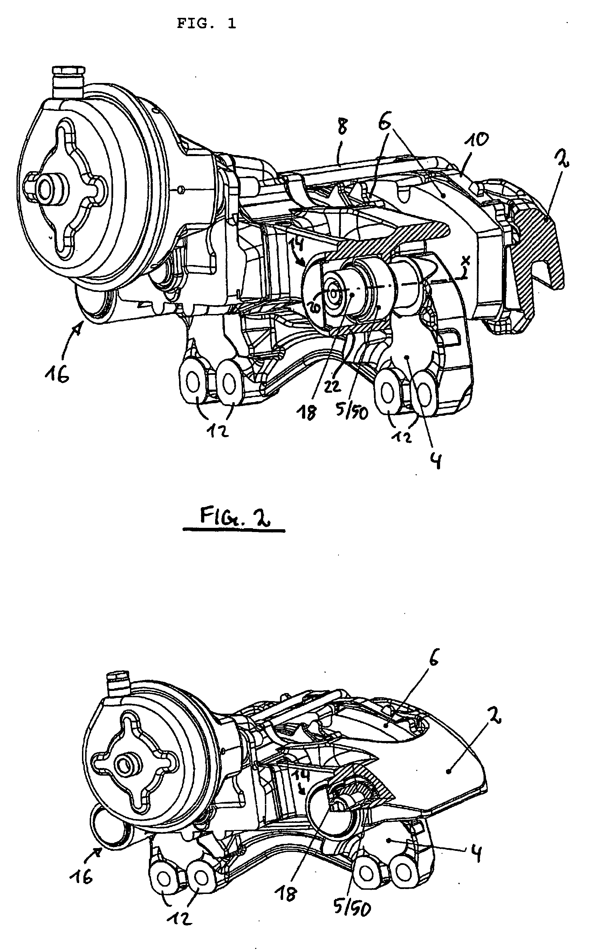

In Figuren 1 und 2 ist eine perspektivische, teilweise geschnittene Ansicht einer ersten bevorzugten, beispielhaften Ausführungsform des erfindungsgemäßen Bremssystems dargestellt. Dieses umfasst einen Bremssattel 2 sowie einen Bremsträger 4.

Der Bremssattel 2 ist in der Draufsicht im Wesentlichen O-förmig ausgebildet, um eine in diesem liegende (nicht dargestellte) Bremsscheibe aufzunehmen. Der Bremssattel 2 weist weiterhin zwei gegenüberliegende Bremsbeläge 6 auf, welche entlang einer Axialrichtung x auf jeder Seite der Bremsscheibe angeordnet sind, um mit dieser in Eingriff zu gelangen. Die Axialrichtung x entspricht hierbei im Wesentlichen der Rotationsachse des Rads bzw. der Bremsscheibe oder ist zu dieser im Wesentlichen parallel. Um ein Herausrutschen der Bremsbeläge 6 in Radialrichtung zu verhindern, sind diese über einen Haltebügel 8 nach oben fixiert und durch Federklammern 10 vorgespannt. Der Bremssattel weist weiterhin einen Bremskolben und Bremszylinder auf (in Figuren 1 und 2 links dargestellt), mittels welchen der diesen benachbarte Bremsbelag 6 in Richtung des gegenüberliegenden Bremsbelags verschoben werden kann, um die zwischenliegende Bremsscheibe zu betätigen. Um einen Eingriff von beiden Bremsbelägen 6 mit der Bremsscheibe zu ermöglichen, ist der Bremssattel Teil einer sog. Schwimmsattelbremse und daher entlang der Axialrichtung x verschieblich bzw. verlagerbar angeorndet.

Der Bremsträger 4 weist einen Befestigungsabschnitt 12 auf, über welchen das Bremssystem mittelbar oder unmittelbar mit dem Aufhängungssystem oder Rahmen eines Fahrzeugs im Wesentlichen starr befestigt ist. Weiterhin weist der Bremsträger 4 eine erste Lagereinrichtung 14 und eine zweite Lagereinrichtung 16 auf. Mittels der ersten Lagereinrichtung 14 und der zweiten Lagereinrichtung 16 ist der Bremssattel 2 an dem Bremsträger 4 in Axialrichtung x verlagerbar angeordnet, um somit die Funktion der Schwimmsattelbremse zu ermöglichen.

Um die während des Bremsens auftretenden Schwingungen nicht oder nur geringfügig an den Bremsträger 4 zu übertragen, ist der Bremssattel 2 über ein Dämpfungselement 5;50 der ersten Lagereinrichtung 14 an dem Bremsträger 4 gelagert. Hierfür weist die erste Lagereinrichtung 14 einen ersten Lagerbolzen 18 auf, der sich ausgehend vom Bremsträger 4 in Axialrichtung x erstreckt. Der erste Lagerbolzen 18 ist hierbei mittels eines Befestigungsmittels 20 an dem Bremsträger 4 fixiert. Ein distaler Endbereich des ersten Lagerbolzens 18 erstreckt sich in eine erste Aufnahme 22 des Bremssattels 2. Die erste Aufnahme 22 ist hierbei als Hohlraum bzw. Rücksprung ausgebildet, welcher sich in Axialrichtung x erstreckt.

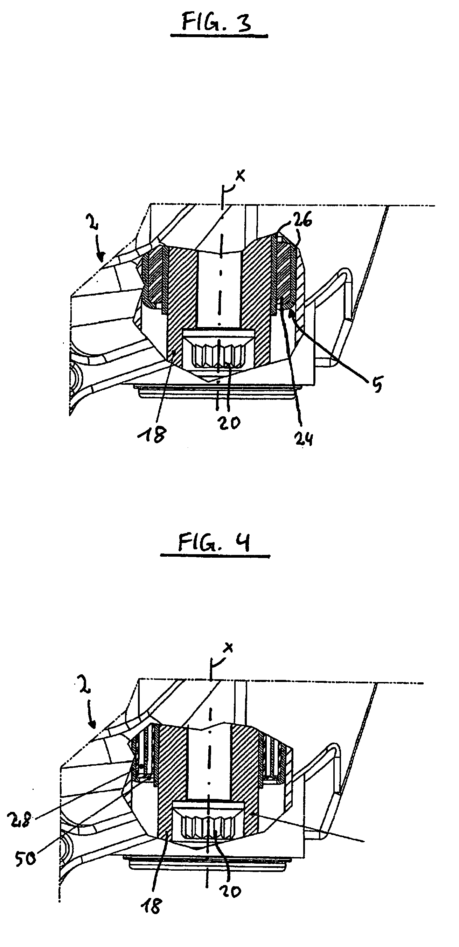

Um eine Schwingungsdämpfung zu ermöglichen, sind der erste Lagerbolzen 18 und die erste Aufnahme 22 über das Dämpfungselement 5,50 miteinander verbunden. In der in Fig. 3 dargestellten Ausführungsform nicht gemäβ der Erfindung ersten Lagereinrichtung 14 ist das Dämpfungselement 5 als Elastomerlager ausgebildet. Dieses weist einen Elastomerkern bzw. Dämpfungskern 24 auf, der sich ringförmig und konzentrisch um den ersten Lagerbolzen herum erstreckt. Zu der Mantelfläche des ersten Lagerbolzens 18 und zu der Innenmantelfläche der ersten Aufnahme 22 hin ist der Dämpfungskern 24 durch entsprechende ringförmige Schutzkörper 26 geschützt.

In der in Fig. 4 dargestellten erfindungsgemäβen Ausführungsform ist das Dämpfungselement 50 als Hydrolager ausgebildet. Dieses ist als ringförmiger hohler Körper ausgebildet, in dessen Inneren Öl oder ein anderes Fluid vorgesehen ist, um Schwingungen zu absorbieren. Besonders vorteilhaft ist der Hohlraum 28 des Hydrolagers 50 in einzelne Kammern unterteilt. Vorteilhafterweise ist die Passung zwischen Dämpfungselement 5; 50 und erster Aufnahme 22 sowie erstem Lagerbolzen 18 derart, dass während der Betätigung der Bremse das Dämpfungselement 5; 50 im Wesentlichen ortsfest zu der ersten Aufnahme 22 verbleibt, während der erste Lagerbolzen 18 in dem Dämpfungselement 5; 50 in Axialrichtung gleitet.

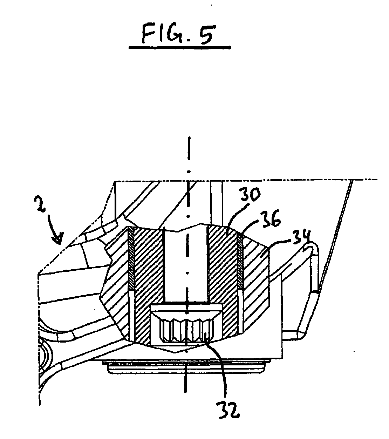

In Fig. 5 ist eine teilweise geschnittene Ansicht der zweiten Lagereinrichtung 16 dargestellt. Diese ist zweckmäßigerweise als schwingungsungedämpftes Festlager ausgebildet, sodass sich zusammen mit der schwingungsgedämpften ersten Lagereinrichtung 14 ein statisch bestimmtes System ergibt. Entsprechend weist die zweite Lagereinrichtung 16 einen zweiten Lagerbolzen 30 auf, der sich in Axialrichtung x erstreckt und über Befestigungsmittel 32 an dem Bremsträger 4 fixiert ist. Der zweite Lagerbolzen ist zumindest teilweise in einer zweiten Aufnahme 34 aufgenommen, die entsprechend der ersten Aufnahme 22 ausgebildet sein kann. Der Innendurchmesser der zweiten Aufnahme 34 muss jedoch nicht gleich dem Innendurchmesser der ersten Aufnahme 22 sein, sondern kann gegebenenfalls der Außenkonfiguration einer zwischen dem zweiten Lagerbolzen 30 und der zweiten Aufnahme 34 angeordneten Hülse oder Buchse 36 angepasst sein. Die Hülse oder Buchse 36 kann zweckmäßigerweise als Gleitlager mit keinem oder nur sehr geringem Spiel zwischen dem zweiten Lagerbolzen 30 und der zweiten Aufnahme 34 angeordnet sein.

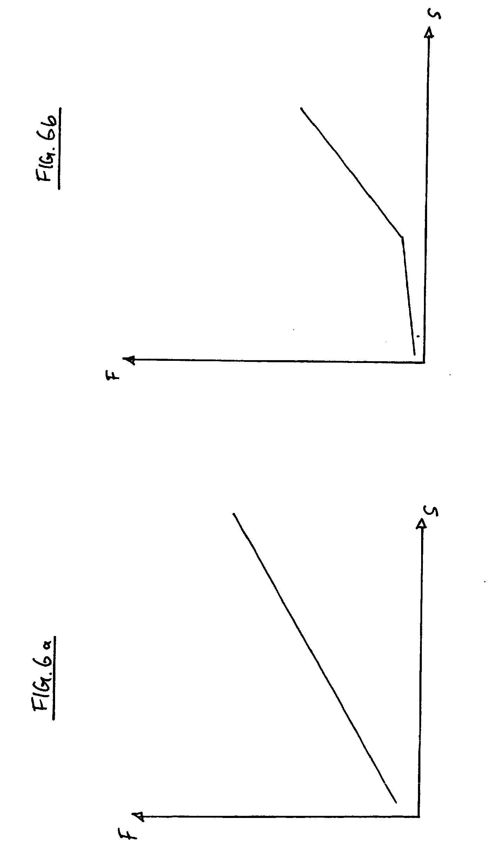

In Fig. 6 sind Kennlinien von Dämpfungselementen 5 dargestellt. Fig. 6a zeigt hierbei die Kennlinie eines Dämpfungselements mit linearer Feder- bzw. Dämpferkennlinie. In anderen Worten ist das Dämpfungselement 5 gemäß Fig. 6a aus einem im Wesentlichen homogenen bzw. aus gleichem Material ausgebildet. In Fig. 6b ist eine Feder- bzw. Dämpferkennlinie einer alternativen Ausführungsform des Dämpfungselements 5 dargestellt. Wie ersichtlich, ist die Federlinie nicht konstant bzw. nicht linear ausgebildet. Dies ist insbesondere bei einem Elastomerlager gegeben, welches mehrschichtig aufgebaut ist, wobei der äußere Bereich vorzugsweise weich und der innere Bereich aus einem härteren Material ausgebildet ist.

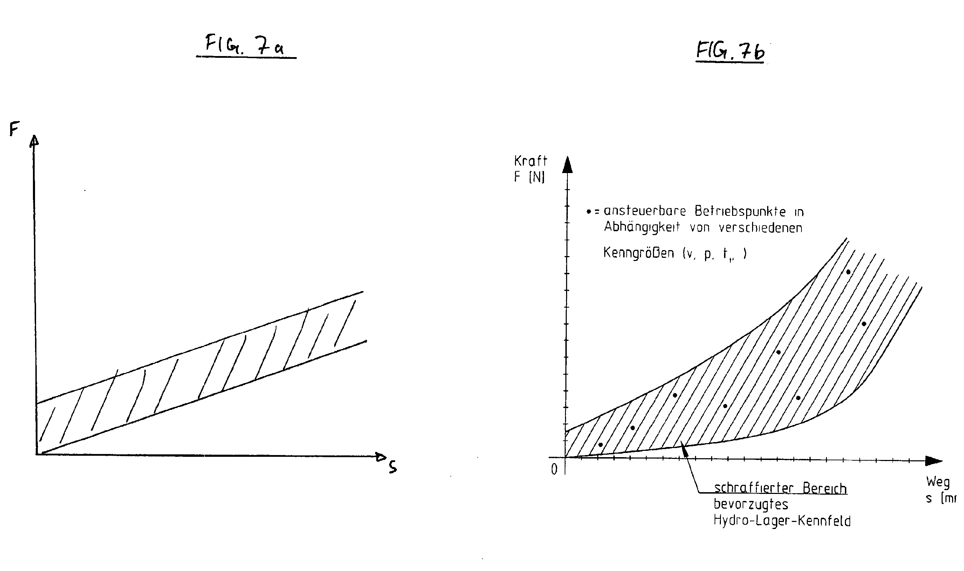

In Fig. 7a ist ein Feder- bzw. Dämpferkennfeld eines standardisierten Hydrolagers gezeigt. Wie ersichtlich, ist das Feder- bzw. Dämpferkennfeld im Wesentlichen linear gestaltet. In Fig. 7b hingegen ist ein Feder- bzw. Dämpferkennfeld eines Hydrolagers gezeigt, bei welchem die Viskosität des darin angeordneten Fluids über eine Regel- bzw. Steuereinrichtung veränderlich bzw. einstellbar ist.

Die Dämpfungselemente der in den Figuren 6b und 7b dargestellten Kennlinien bzw. Kennfelder haben den Vorteil, dass Schwingungen des Bremssattels bei niedrigem Bremsdruck optimal verhindert werden können, wobei bei hohem Bremsdruck eine geringere Dämpfung vorgesehen ist, so dass der Bremssattel optimal geführt wird.

### Bezugszeichenliste:

- 2: Bremssattel
- 4: Bremsträger
- 5: Dämpfungselement (Elastomerlager)
- 6: Bremsbelag
- 8: Haltebügel
- 10: Federklammer
- 12: Befestigungsabschnitt
- 14: erste Lagereinrichtung
- 16: zweite Lagereinrichtung
- 18: erster Lagerbolzen
- 20: Befestigungsmittel
- 22: erste Aufnahme
- 24: Dämpfungskern
- 26: Schutzkörper
- 28: Hohlraum
- 30: zweiter Lagerbolzen
- 32: Befestigungsmittel
- 34: zweite Aufnahme
- 36: Buchse
- 50: Dämpfungselement (Hydrolager)
- X: Axialrichtung

## Patentansprüche

1. Bremssystem für Scheibenbremsen, insbesondere von Landfahrzeugen, umfassend
einen Bremssattel (2), welcher zwei gegenüberliegende Bremsbeläge (6) aufweist, um mit einer zwischen diesen angeordneten Bremsscheibe in Eingriff zu gelangen, und
einen Bremsträger (4), an welchem der Bremssattel (2) über eine Befestigungsvorrichtung axial verlagerbar angeordnet ist,
wobei die Befestigungsvorrichtung eine erste Lagereinrichtung (14) aufweist, über welche der Bremssattel (2) an dem Bremsträger (4) schwingungsgedämpft gelagert ist,
wobei der Bremssattel (2) über ein als Hydrolager ausgebildetes Dämpfungselement (5; 50) der ersten Lagereinrichtung (149) an dem Bremsträger (4) gelagert ist, und
wobei die Befestigungsvorrichtung eine zweite Lagereinrichtung (16) aufweist, über welche der Bremssattel (2) an dem Bremsträger (4) axial verlagerbar gelagert ist, **dadurch gekennzeichnet, dass** die zweite lagereinrichtung (16) als schwingungsungedämpftes Festlager ausgebildet ist.

2. Bremssystem nach Anspruch 1,
wobei die erste Lagereinrichtung (14) einen ersten Lagerbolzen (18) und eine erste Aufnahme (22) aufweist, von welchen der/die eine am Bremsträger (4) und der/die andere am Bremssattel (2) vorgesehen ist, und
wobei der erste Lagerbolzen (18) zumindest teilweise in der ersten Aufnahme (22) aufgenommen ist.

3. Bremssystem nach Anspruch 2,
wobei der erste Lagerbolzen (18) und die erste Aufnahme (22) über ein Dämpfungselement (5; 50) miteinander verbunden sind.

4. Bremssystem nach einem der vorhergehenden Ansprüche,
wobei das Dämpfungselement (5; 50) als ringförmiger Körper ausgebildet ist.

5. Bremssystem nach einem der vorhergehenden Ansprüche, wobei das Dämpfungselement (5; 50) eine nicht-konstante oder nicht-lineare Feder- bzw. Dämpferkennlinie aufweist.

6. Bremssystem nach einem der vorhergehenden Ansprüche,
wobei das Hydrolager als ringförmiger hohler Körper ausgebildet ist, in dessen Inneren ein Fluid vorgesehen ist.

7. Bremssystem nach Anspruch 6, wobei das Hydrolager ein Fluid aufweist, dessen Viskosität vorzugsweise über eine Regel- bzw. Steuereinrichtung veränderlich bzw. einstellbar ist.

8. Bremssystem nach einem der vorhergehenden Ansprüche,
wobei die zweite Lagereinrichtung (16) einen zweiten Lagerbolzen (30) und eine zweite Aufnahme (34) aufweist, von welchen der/die eine am Bremsträger (4) und der/die andere am Bremssattel (2) vorgesehen ist, und
wobei der zweite Lagerbolzen (30) zumindest teilweise in der zweiten Aufnahme (34) aufgenommen ist.

9. Bremssystem nach Anspruch 8,
wobei die erste und die zweite Aufnahme (22; 34) die gleiche Innenkonfiguration aufweisen.

## Claims

1. Brake system for disk brakes, particularly of land vehicles, comprising
a brake caliper (2), which comprises two opposite brake linings (6) in order to engage with a brake disk arranged between said brake linings, and
a brake bracket (4), on which the brake caliper (2) is arranged in an axially movable manner through a fastening device,
wherein the fastening device comprises a first bearing device (14), through which the brake caliper (2) is supported on the brake bracket (4) in a vibration-damped manner,
wherein the brake caliper (2) is supported on the brake bracket (4) by means of a damping element (5; 50) designed as a hydro-bearing of the first bearing device (14), and
wherein the fastening device comprises a second bearing device (16) by means of which the brake caliper (2) is supported on the brake bracket (4) in an axially movable manner,
**characterized in that** the second bearing device (16) is designed as a vibration-undamped fixed bearing.

2. Brake system according to claim 1,
wherein the first bearing device (14) comprises a first bearing pin (18) and a first accommodation (22), one of which is provided on the brake bracket (4) and the other one is provided on the brake caliper (2), and
wherein the first bearing pin (18) is accommodated at least partially in the first accommodation (22).

3. Brake system according to claim 2,
wherein the first bearing pin (18) and the first accommodation (22) are connected to one another by means of a damping element (5; 50).

4. Brake system according to any one of the preceding claims,
wherein the damping element (5; 50) is designed as a ring-shaped body.

5. Brake system according to any one of the preceding claims,
wherein the damping element (5; 50) has a non-constant or non-linear spring or damper characteristics, respectively.

6. Brake system according to any one of the preceding claims,
wherein the hydro-bearing is designed as a ring-shaped hollow body, in the inside of which a fluid is provided.

7. Brake system according to claim 6,
wherein the hydro-bearing comprises a fluid, the viscosity of which is preferably variable or adjustable, respectively, by means of a control device.

8. Brake system according to any one of the preceding claims,
wherein the second bearing device (16) comprises a second bearing pin (30) and a second accommodation (34), one of which is provided on the brake bracket (4) and the other one is provided on the brake caliper (2), and wherein the second bearing pin (30) is at least partially accommodated in the second accommodation (34).

9. Brake system according to claim 8,
wherein the first and the second accommodations (22; 34) have the same inner configuration.

## Revendications

1. Système de freinage pour freins à disques, en particulier de véhicules terrestres, comprenant
un étrier de frein (2) qui comprend deux garnitures de freinage opposées (6) afin de venir en engagement avec un disque de frein agencé entre celles-ci, et
un support de frein (4) sur lequel l'étrier de frein (2) est agencé avec possibilité de déplacement axial via un dispositif de fixation,
dans lequel le dispositif de fixation comprend un premier moyen formant palier (14) via lequel l'étrier de frein (2) est monté sur le support de frein (4) de manière amortie vis-à-vis des vibrations,
dans lequel l'étrier de frein (2) est monté sur le support de frein (4) via un élément d'amortissement (5 ; 50), réalisé sous forme de palier hydrostatique, du premier moyen formant palier (14), et
dans lequel le dispositif de fixation comprend un second moyen formant palier (16) via lequel l'étrier de frein (2) est monté sur le support de frein (4) avec possibilité de déplacement axial,
**caractérisé en ce que** le second moyen formant palier (16) est réalisé sous forme de palier fixe non amorti vis-à-vis des vibrations.

2. Système de freinage selon la revendication 1,
dans lequel le premier moyen formant palier (14) comprend un premier goujon de palier (18) et un premier logement (22) dont l'un est prévu sur le support de frein (4) et l'autre est prévu sur l'étrier de frein, et
dans lequel le premier goujon de palier (18) est reçu au moins partiellement dans le premier logement (22).

3. Système de freinage selon la revendication 2,
dans lequel le premier goujon de palier (18) et le premier logement (22) sont reliés l'un à l'autre via un élément d'amortissement (5 ; 50).

4. Système de freinage selon l'une des revendications précédentes,
dans lequel l'élément d'amortissement (5 ; 50) est réalisé comme un corps de forme annulaire.

5. Système de freinage selon l'une des revendications précédentes, dans lequel l'élément d'amortissement (5 ; 50) présente une ligne caractéristique d'élasticité ou d'amortissement non constante ou non linéaire.

6. Système de freinage selon l'une des revendications précédentes,
dans lequel le palier hydrostatique est réalisé comme un corps creux de forme annulaire à l'intérieur duquel est prévu un fluide.

7. Système de freinage selon la revendication 6, dans lequel le palier hydrostatique comprend un fluide dont la viscosité est variable ou réglable de préférence via un dispositif de régulation ou de commande.

8. Système de freinage selon l'une des revendications précédentes,
dans lequel le second moyen formant palier (16) comprend un second goujon de palier (30) et un second logement (34), dont l'un est prévu sur le support de frein (4) et l'autre est prévu sur l'étrier de frein (2), et
dans lequel le second goujon de palier (30) est au moins partiellement reçu dans le second logement (34).

9. Système de freinage selon la revendication 8,
dans lequel le premier et le second logement (22 ; 34) présentent la même configuration intérieure.
